# EUROPEAN PATENT SPECIFICATION

(11) **EP 4 163 524 B1**
(45) Date of publication and mention of the grant of the patent: **09.12.2026**
(21) Application number: 20939185.3
(22) Date of filing: 05.06.2020
(51) Int. Cl.: F16K 11/00, B60K 1/00, B60K 11/00, B60K 11/02, F16K 11/22, F16K 11/24, F16K 27/00

(54) **INTEGRATED MULTI-PORT SOLENOID VALVE, VEHICLE THERMAL MANAGEMENT SYSTEM, AND VEHICLE**
INTEGRIERTES MULTIPORT-MAGNETVENTIL, FAHRZEUGWÄRMEVERWALTUNGSSYSTEM UND FAHRZEUG
ÉLECTROVANNE À ORIFICES MULTIPLES INTÉGRÉE, SYSTÈME DE GESTION THERMIQUE DE VÉHICULE ET VÉHICULE

(43) Date of publication of application: 12.04.2023
(73) Proprietor: Zhejiang Liankong Technologies Co., Ltd, Ningbo, Zhejiang 315336 (CN); Zhejiang Geely Holding Group Co., Ltd., Hangzhou, Zhejiang 310051 (CN)
(72) Inventor: LIN, Bingrong, Hangzhou Bay New District, Ningbo, Zhejiang 315336 (CN)
(74) Representative: Zaboliene, Reda
(86) International application number: PCT/CN2020/094774
(87) International publication number: WO 2021/243721

(56) References cited:
- WO-A1-2013/076768
- CN-A- 101 566 244
- CN-U- 203 560 516
- CN-U- 210 118 479
- CN-U- 210 178 994
- DE-A1- 102018 102 542
- JP-U- S49 145 216
- US-B1- 6 467 502
- US-B2- 10 443 747
- US-B2- 9 347 577
- US-B2- 9 850 920

## Description

### CROSS REFERENCE

The present disclosure is the national phase of International Application No. PCT/CN2020/094774, filed on June 5, 2020, applied by ZHEJIANG LIANKONG TECHNOLOGIES CO., LTD and ZHEJIANG GEELY HOLDING GROUP CO., LTD, and entitled "INTEGRATED MULTI-PORT SOLENOID VALVE, VEHICLE THERMAL MANAGEMENT SYSTEM, AND VEHICLE".

### TECHNICAL FIELD

The present disclosure relates to solenoid valves, in particular to an integrated multi-port solenoid valve, a vehicle thermal management system and a vehicle.

### BACKGROUND

Electromagnetic valve is an industrial equipment controlled by electromagnetism. It is an automatic basic element used to control fluid, and belongs to actuator but not limited to be actuated by hydraulic or pneumatic. It is used in industrial control system to adjust direction, flow rate, speed and other parameters of the medium. The solenoid valve can cooperate with different circuits to achieve desired control, and the control accuracy and flexibility can be assured. There are many kinds of solenoid valves, with different solenoid valves playing different roles in different positions of the control system. The solenoid valves are most commonly used as one-way valves, safety valves, direction control valves, speed control valves, and etc.

Solenoid valves are widely used in vehicles. According to principle of the whole vehicle thermal management system, pure electric vehicles need to achieve the requirements of various working conditions through the solenoid valves. At present, three-way solenoid valves and four-way solenoid valves are commonly used in the listed vehicle models. However, with the increasing number of working conditions required by the whole vehicle thermal management system and the improvement of the requirements for control accuracy, the thermal management system built with three-way solenoid valve or four-way solenoid valve can no longer meet the requirements, and it is necessary to develop a multi-path solenoid valve that can be applied to multiple exchange loops.

WO 2013076768A1 discloses a flow rate control device, according to the preamble of claim 1, which is provided with an input port (8) connecting to the chamber (20a) of one of the two solenoid valves. Output ports (9a, 9b) are connected to the respective opening-closing passages (21a, 21b) of the two solenoid valves. The flow rate control device is also provided with a connection port (23) for connecting the chambers (20a, 20b), and this also allows fluid to flow to the chamber (20b), the fluid having been introduced into the chamber (20a) from the input port (8).

US 6467502B1 discloses a manifold assembly and method of making the same is disclosed. The manifold assembly is preferably made of a polymer. A mold is used to make the manifold portion of the manifold assembly such that small diameter passageways and valve seats are formed enabling use of small solenoids. Since pressure is applied to small diameter plunger seals (valves) driven by solenoid plungers, small solenoids may be used because the force on the solenoid plungers is correspondingly low. The manifold assembly is comprised of a manifold portion and a plug portion. The manifold portion, as disclosed, has an inlet port for the supply of air pressure. An inlet housing in which an inlet solenoid is housed, a supply port for supplying air to or exhausting air from a reservoir, and an exhaust housing in which an exhaust solenoid is housed are connected to a chamber. The chamber which interconnects the housings and supply port is enclosed by the plug portion which is ultrasonically welded to the manifold portion.

US 9850920B2 discloses a fluid control apparatus which has a reduced number of components and enables simple alteration such as increasing or decreasing the number of lines. Channel blocks on a lower stage include a plural-line (three-line) passage block 21 disposed over a plurality of lines. The plural-line passage block 21 receives an upper stage over three lines, with each of the lines including an inlet extension 16b of a flow rate controller 16, and two inlet-side on-off valves 14, 15 arranged in series with the inlet extension 16b. The plural-line passage block 21 has longitudinal passages and transverse passages therein. The longitudinal passages are in communication with passages of the fluid control devices arranged in series per line. The transverse passages are in communication with passages of fluid control devices arranged in adjacent lines.

JP 349145216U discloses a solenoid valve characterized in that the passages opened and closed in a three-way switching solenoid valve are concentrated on one surface by bypassing the passages inside the solenoid.

DE 102018102542A1 discloses an apparatus handles at least one fluid in a vehicle, particularly an at least partly electric driven vehicle, comprising at least one essentially plate-shaped formed first distribution element and at least one second distribution element arranged essentially parallel to the first distribution element. The first distribution element and/or the second distribution element include at least one fluid handling element. The first distribution element and the second distribution element include plastics.

### SUMMARY

The technical problem to be solved by the present disclosure is that the number of the paths in the solenoid valve of the prior art cannot meet the working condition requirements of the vehicle heat exchange system.

To solve the above technical problems, in a first aspect, the embodiment of the present disclosure provides an integrated multi-port solenoid valve, which includes:
at least two sub-solenoid valves, and each of the at least two sub-solenoid valves includes at least two connection ports;
at least one first joint, each of which includes at least two connection joints;
the integrated multi-port solenoid valve further includes a base, the base is provided with at least one connection hole, the at least two connection ports include at least one first connection port and a second connection port, the at least one first connection port is configured for connecting with other sub-solenoid valves, the second connection port of the at least two sub-solenoid valves is connected with some of the at least one connection hole through a second joint;
the at least two connection joints includes a first type of connection joint and a second type of connection joint, the first type of connection joint is connected with the at least one first connection port, the second type of connection joint is connected with the other of the at least one connection hole, the at least one first joint and the second joint are single members independent from the at least two sub-solenoid valves and the base.

Furthermore, a valve body of each of the at least two sub-solenoid valve is connected with the base.

Furthermore, the second joint includes a first end and a second end, the first end is connected with the second connection port, and the second end is connected with the connection hole.

Furthermore, the number of the connection holes is greater than or equal to the number of the second joints.

Furthermore, the number of the connection holes is greater than the number of the second joints, the second type of connection joint participated in constituting connection ports of the integrated multi-port solenoid valve.

Furthermore, the number of the first joints is at least one less than that of the sub-solenoid valves.

Furthermore, the first joint is a two-way joint, a three-way joint or a four-way joint.

Furthermore, the sub-solenoid valve is a two-way solenoid valve, a three-way solenoid valve or a four-way solenoid valve.

Furthermore, the sub-solenoid valve is at least one of the direct acting solenoid valve, the step direct acting solenoid valve and the pilot solenoid valve.

Furthermore, the first end is connected with the second connection port by laser welding process.

Further, the second end is connected with the connection hole by hot plate welding process.

In a second aspect, the embodiment of the present disclosure provides a vehicle thermal management system, which includes the abovementioned integrated multi-port solenoid valve.

In a third aspect, the embodiment of the present disclosure provides a vehicle, which includes the abovementioned vehicle thermal management system.

With the above technical solutions, the integrated multi-port solenoid valve, the vehicle thermal management system and the vehicle described in the embodiment of the present disclosure have the following advantages:
1) The integrated multi-port solenoid valve described in the embodiment of the present disclosure integrates a plurality of sub-solenoid valves, and any connection port of each sub-solenoid valve can be interconnected to meet the control requirements of various working conditions. The integrated multi-port solenoid valve has lightweight design, less components, light weight, and low cost of use;
2) The integrated multi-port solenoid valve described in the embodiment of the present disclosure integrates multiple sub-solenoid valves on a base to form a highly integrated component, with highly integrated components, compact structural arrangement and convenient assembly and use. The connection joint and the connection port of the sub-solenoid valve are connected by laser welding process, and the connection joint and the base are connected by hot plate welding process, which solves the reliability problem of the integrated connection of multiple sub-solenoid valves in the prior art;
3) The vehicle thermal management system described in the embodiment of the present disclosure can meet the requirements of various working conditions by using integrated multi-port solenoid valves to build the system architecture, so that the vehicle thermal management system can have more functions, simple control structure, and meet more accurate control requirements. In addition, the use of integrated multi-port solenoid valve can simplify the pipeline system, reduce the number of pipelines, thus reducing the number of components used for pipeline connection and sealing, reducing costs, and facilitating maintenance.

### BRIEF DESCRIPTION OF THE DRAWINGS

In order to illustrate the technical solutions of the present disclosure more clearly, the following will briefly introduce the accompanying drawings that are required to be used in the description of the embodiments. Obviously, the drawings in the following description are only some of the embodiments of the present disclosure, and for those of ordinary skill in the art, other drawings can also be obtained from these drawings without creative work.
FIG. 1 is a schematic structural view of an integrated multi-port solenoid valve according to an embodiment of the present disclosure;
FIG. 2 is a schematic structural view of a base of an embodiment of the present disclosure;
FIG. 3 is a schematic structural view of an integrated multi-port solenoid valve according to another embodiment of the present disclosure;

The attached drawings are supplementally described ed as follows:
10- base; 101-connection hole; 20-sub-solenoid valve; 201-first three-way sub-solenoid valve; 202-second three-way sub-solenoid valve; 203-four-way sub-solenoid valve; 30-first joint; 40-second joint.

### DETAILED DESCRIPTION OF PREFERRED EMBODIMENTS

The technical solutions in the embodiments of the present disclosure will be clearly and completely described below with reference to the accompanying drawings in the embodiments of the present disclosure. Obviously, the described embodiments are only some of the embodiments of the present disclosure, rather than all of the embodiments. The invention is only limited by the scope of the appended claims.

Reference herein to "one embodiment" or "an embodiment" refers to a particular feature, structure, or characteristic that may be included in at least one implementation of the present disclosure. In the description of the present disclosure, it should be understood that the orientation or positional relationship indicated by terms "upper", "top", "bottom" and the like are based on the orientation or position relationship shown in the accompanying drawings, and is only for the convenience of description, rather than intended to indicate or imply that the device or element must have a particular orientation, be constructed and operate in a particular orientation, and therefore should not be construed as a limitation of the present disclosure. In addition, the terms "first" and "second" are only used for descriptive purposes, and should not be construed as indicating or implying relative importance or implying the number of indicated technical features. Thus, a feature defined as "first" and "second" may expressly or implicitly include one or more of that feature. Also, the terms "first," "second" and the like are used to distinguish similar objects, and are not necessarily used to describe a particular order or precedence. It is to be understood that the data so used may be interchanged under appropriate circumstances so that the embodiments of the present disclosure described herein can be practiced in sequences other than those illustrated or described herein.

According to the principle of the whole vehicle thermal management, pure electric vehicles need to achieve the requirements of various working conditions through solenoid valves. Three-way and four-way solenoid valves are commonly used in listed models. At present, in order to improve the endurance mileage of pure electric vehicles, the design of the vehicle thermal management system requires to adapt more and more working conditions. Nine-way and more-way solenoid valves appear to be more important.

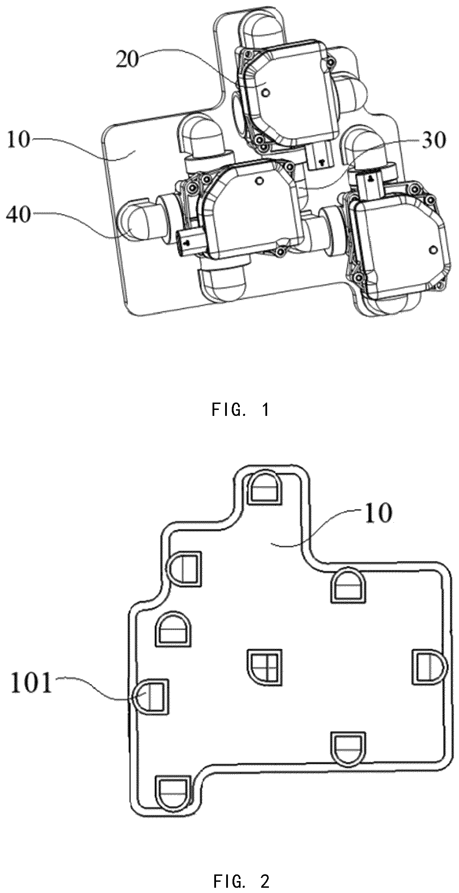

As shown in FIG. 1, the embodiment of the present disclosure discloses an integrated multi-port solenoid valve, which includes at least two sub-solenoid valves 20, each of which includes at least two connection ports; at least one first joint 30, and each first joint 30 includes at least two connection joints; the at least two connection ports includes at least one first connection port for communicating with other sub-solenoid valves 20, the first joint 30 is used for connecting any two sub-solenoid valves 20, and the connection joint is connected with the first connection port.

The integrated multi-port solenoid valve described in the embodiment of the present disclosure integrates multiple sub-solenoid valves 20 together, and any connection port of each sub-solenoid valve 20 can be interconnected to meet the control requirements of various working conditions, so that the integrated multi-port solenoid valve has lightweight design, less components, light weight, and low cost of use.

In the embodiment of the present disclosure, as shown in FIG. 1, a plurality of sub-solenoid valves 20 are connected in series to form an integrated multi-port solenoid valve by connection joints commonly used in pipeline connection. The sub-solenoid valve 20 constituting the multi-port solenoid valve is a common solenoid directional control valve widely used in the industrial technology. Each sub-solenoid valve 20 has at least two connection ports. Optionally, the sub-solenoid valve 20 can be a two-way solenoid valve, a three-way solenoid valve, a four-way solenoid valve, etc. The sub-solenoid valves 20 constituting the multi-port solenoid valve may have the same number of connection ports or have different number of connection ports. The connection ports of each sub-solenoid valve 20 may have two types. The first type of connection port is named as first connection port and used to connect with other sub-solenoid valves 20 in series, and each sub-solenoid valve has one or more first connection port. The second type of connection port is named as second connection port and used to connect pipeline. The second connection port constitutes the connection port of the multi-port solenoid valve. The first joint 30 is a commonly used connection joint in pipeline connection. Optionally, the first joint 30 may be two-way joint, a three-way joint, a four-way joint, or etc. The connection joints in the first joint 30 may also have two types. The first type of connection joint is used to connect with the first connection port, and the second type of connection joint participates in constituting the connection port of the multi-port solenoid valve. It should be noted that if there are more than two first connection ports in one sub-solenoid valve 20, the first type of connection joint in a single first joint 30 is only connected to one of the first connection ports, and there are at most one second type of connection joint in each first joint 30. The material of the sub-solenoid valve 20 in the embodiment of the present disclosure can be metal or plastic, and the sub-solenoid valves 20 constituting the multi-port solenoid valve can be made of different materials. The material of the first joint 30 can be metal or plastic, and the material of the first joint 30 can be the same as that of the sub-solenoid valve 20. For example, both the sub-solenoid valve 20 and the first joint 30 are metal. The material of the first joint 30 can be different from that of the sub-solenoid valve 20. For example, the sub-solenoid valve 20 is made of metal and the first joint 30 is made of plastic.

As shown in Fig. 1, the integrated multi-port solenoid valve also includes a base 10, and any of the sub-solenoid valves 20 is connected with the base 10.

In the embodiment of the present disclosure, the base 10 is a plate with a connection surface. The base 10 is used to integrate and fix the sub-solenoid valve 20, and the valve body of the sub-solenoid valve 20 is connected with the base 10. Optionally, the valve body of each sub-solenoid valve 20 is connected with the base 10. Optionally, the valve bodies of some of the sub-solenoid valves 20 are connected to the base 10.

The at least two connection ports also include a second connection port. A connection hole 101 is arranged on the base 10, and the second connection port is connected with the connection hole 101.

In the embodiment of the present disclosure, as shown in FIG. 2, in order to further improve the integration degree of components of the multi-port solenoid valve and facilitate the installation and use of the multi-port solenoid valve, the connection ports of the multi-port solenoid valve are integrated on the base 10. The second connection port in the sub-solenoid valve 20 constitutes the connection port of the multi-port solenoid valve. Therefore, the base 10 is provided with a connection hole 101, and the second connection port of the sub-solenoid valve 20 is connected with the connection hole 101.

As shown in FIG.1, the integrated multi-port solenoid valve also includes a second joint 40, the second joint 40 includes a first end and a second end, the first end is connected with the second connection port, and the second end is connected with the connection hole 101.

In the embodiment of the present disclosure, as shown in FIG.s 1 and 2, if the direction of the second connection port in the sub-solenoid valve 20 is parallel to the base 10, or spaces a distance from the base 10, the second joint 40 is used to connect the second connection port with the connection hole 101 of the base 10. The second joint 40 may usually be a two-way joint, and its material may be the same as or different from that of the sub-solenoid valve 20.

The number of connection holes 101 is greater than or equal to the number of second joints 40.

In the embodiment of the present disclosure, the connection ports of the integrated multi-port solenoid valve include the second connection port of the sub-solenoid valve 20 and the second type of connection joint of the first joint 30. That is, not all the connection holes 101 are connected with the second joint 40.

The number of connection holes 101 is greater than that of the second joint 40, and at least one connection hole 101 is connected with the second type of connection joint.

In the embodiment of the present disclosure, if the first joint 30 includes the second type of connection joint, that is, if the second type of connection joint participates in constituting the connection ports of the multi-port solenoid valve, part of the connection holes 101 can be directly connected with the second type of connection joint.

The number of first joints 30 is at least one less than the number of sub-solenoid valves 20.

In the embodiment of the present disclosure, the first joint 30 is used to connect the sub-solenoid valves 20 in series. If the sub-solenoid valve 20 includes more than two first connection ports, the first type of connection joint in one single first joint 30 is only connected with one of the first connection ports, so the number of the first joint 30 is less than the number of the sub-solenoid valves 20. For example, if the multi-port solenoid valve is composed of two sub-solenoid valves 20, only one first joint 30 is needed to connect the two sub-solenoid valves 20. If the multi-port solenoid valve is composed of more than two sub-solenoid valves 20, one or more first joints 30 are needed to connect all of the sub-solenoid valves 20. In general, the number of first joints 30 in the integrated multi-port solenoid valve depends on the number of sub-solenoid valves 20 and the number of connection joints in the first joint 30.

The first joint 30 may be a two-way joint, a three-way joint or a four-way joint.

In the embodiment of the present disclosure, in order to reduce the cost and improve universality of the components, the first joint 30 adopts two-way joint, three-way joint or four-way joint that are commonly used in the current pipeline connection.

The sub-solenoid valve 20 may be a two-way solenoid valve, a three-way solenoid valve or a four-way solenoid valve.

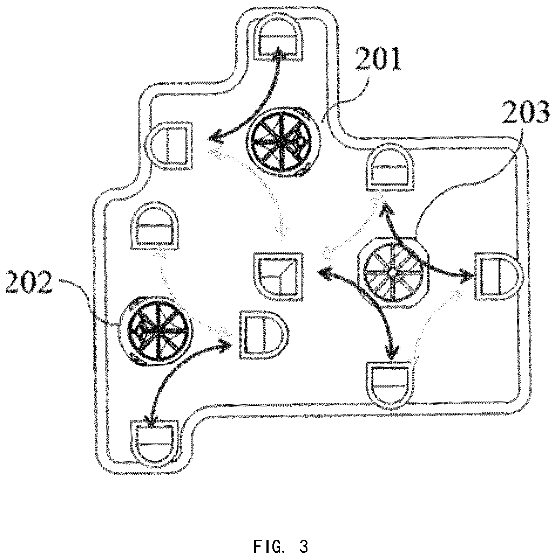

In the embodiment of the present disclosure, the sub-solenoid valve 20 adopts two-way solenoid valve, three-way solenoid valve or four-way solenoid valve that are commonly used in the market, and the required combination of the sub-solenoid valve 20 is determined by the final design requirements. For example, as shown in FIG. 2, the required multi-port solenoid valve is a nine-way solenoid valve, and a combination of two four-way sub-solenoid valves and one three-way sub-solenoid valve can be used. The three sub-solenoid valves 20 are connected by a four-way first joint 30, and one connection joint in the first joint 30 constitutes one connection port of the nine-way solenoid valve. Optionally, a combination of three four-way sub-solenoid valves can also be used, and the three sub-solenoid valves 20 are connected by a three-way first joint 30. Similarly, a ten-way, an eleven-way or more-way solenoid valve can also be realized by adopting different number of sub-electronic valve combinations and different number of connection ports. It should be noted that the implementation of the integrated multi-port solenoid valve is not limited to the above description. As shown in FIG. 3, in some embodiments, the base 10 may also be integrated with a sub-solenoid valve 20 which is not connected to other sub-solenoid valves 20 by the first joint 30, but is connected to other sub-solenoid valves 20 through one end of the connection surface of the base 10. For example, in the design of nine-way solenoid valve, a combination of one four-way sub-solenoid valve 203 and two three-way sub-solenoid valves 20 (i.e., a first three-way sub-solenoid valve 201 and a second three-way sub-solenoid valve 202) may also be used, as shown in FIG. 3, the first three-way sub-solenoid valve 201 and the four-way sub-solenoid valve 203 are connected through a three-way first joint 30, one connection joint in the first joint 30 constitutes one connection port of the nine-way solenoid valve, and the second three-way sub-solenoid valve 202 is individually connected with the base 10. When the nine-way solenoid valve is installed and used, the independent second three-way sub-solenoid valve 202 is connected with the four-way sub-solenoid valve 203 and the first three-way sub-solenoid valve 201 in the valve seat or pipeline system matching with the base 10. By controlling a motor to rotate the valve bodies of the two three-way sub-solenoid valves and the four-way sub-solenoid valve 203, the connectivity between the connection ports can be switched to meet the vehicle working conditions.

The sub-solenoid valve 20 may be at least one of the direct acting solenoid valve, the step direct acting solenoid valve and the pilot solenoid valve.

In the embodiment of the present disclosure, the sub-solenoid valves 20 constituting the multi-port solenoid valve may be solenoid valves of same type or solenoid valves of different types. For achieving of the unity and convenience of control, the sub-solenoid valves 20 are preferably the solenoid valves of same type.

The first end is connected with the second connection port by laser welding process.

In the embodiment of the present disclosure, in the prior art, how to realize reliable connection between the connection ports of the solenoid valve is an urgent problem to be solved. The present disclosure adopts laser welding technology to realize the connection between the first joint 30 and the second joint 40 and the sub-solenoid valve 20. Laser welding can reduce the heat input to a minimum required amount, make the material transform range in the heat affection zone be small, and cause the deformation caused by heat conduction be the minimum. Laser welding does not require the use of electrodes, and there is no concern about electrode contamination or damage. Because laser welding is not a contact welding process, the wear and deformation of the machine can be minimized. The laser beam is easy to focus, align and be guided by optical instruments, and will not be limited by the welding space. At the same time, the laser beam is able to focus on a very small area, therefore could weld small and closely spaced components, could choose a wide range of welding materials, and could also join various heterogeneous materials. Moreover, it is easy to carry out highspeed welding automatically, and can also be controlled by digital or computer.

The second end is connected with the connection hole 101 by hot plate welding process.

In the embodiment of the present disclosure, the first joint 30, the second joint 40 and the base 10 are made of plastic materials, and the first joint 30, the second joint 40 and the base 10 can be connected by hot plate welding.

The embodiment of the present disclosure also discloses a vehicle thermal management system, which includes the integrated multi-port solenoid valve as described above.

In the embodiment of the present disclosure, the vehicle thermal management system includes an integrated multi-port solenoid valve. The structure of the integrated multi-port solenoid valve can be referred to all of the embodiments of the integrated multi-port solenoid valve described above. The multi-port solenoid valve can be designed to meet the requirements of multiple working conditions of the vehicle thermal management system of the present disclosure. By using integrated multi-port solenoid valve to build the system architecture, the vehicle thermal management system can have more functions, simplify the control structure, and meet more accurate control requirements. In addition, the use of integrated multi-port solenoid valve can simplify the pipeline system, reduce the number of pipelines, thus reducing the number of components used for pipeline connection and sealing, reducing costs, and facilitating maintenance.

The embodiment of the present disclosure also discloses a vehicle, which includes a vehicle thermal management system as described above.

In the embodiment of the present disclosure, for pure electric vehicles, the endurance mileage has always been a major factor limiting their development. For the vehicle described in the embodiment of the present disclosure, the integrated multi-port solenoid valve is used in the thermal management system, which can achieve a variety of energy-saving working conditions by designing corresponding control logic, so that the energy in the power battery can be more applied to the endurance mileage of the vehicle.

## Claims

1. An integrated multi-port solenoid valve, comprising:
at least two sub-solenoid valves (20), and each of the at least two sub-solenoid valves (20) comprising at least two connection ports;
at least one first joint (30), and each of the at least one first joint (30) comprising at least two connection joints;
**characterized in that** the integrated multi-port solenoid valve further comprises a base (10), the base (10) is provided with at least one connection hole (101), the at least two connection ports comprise at least one first connection port and a second connection port, the at least one first connection port is configured for connecting with other sub-solenoid valves (20), the second connection port of the at least two sub-solenoid valves (20) is connected with some of the at least one connection hole (101) through a second joint (40);
the at least two connection joints comprises a first type of connection joint and a second type of connection joint, the first type of connection joint is connected with the at least one first connection port, the second type of connection joint is connected with the other of the at least one connection hole (101), the at least one first joint (30) and the second joint (40) are single members independent from the at least two sub-solenoid valves (20) and the base (10).

2. The integrated multi-port solenoid valve according to claim 1, wherein a valve body of each of the at least two sub-solenoid valves (20) is connected with the base (10).

3. The integrated multi-port solenoid valve according to claim 1, wherein the at least one first joint (30) and the second joint (40) are located on the base (10) and on the side of a corresponding sub-solenoid valve (20).

4. The integrated multi-port solenoid valve according to claim 1, wherein the second joint (40) comprises a first end and a second end, the first end is connected with the second connection port, and the second end is connected with the connection hole (101).

5. The integrated multi-port solenoid valve according to claim 4, wherein the number of the connection holes (101) is greater than or equal to the number of the second joints (40).

6. The integrated multi-port solenoid valve according to claim 5, wherein the number of the connection holes (101) is greater than the number of the second joints (40), the second type of connection joint participated in constituting connection ports of the integrated multi-port solenoid valve.

7. The integrated multi-port solenoid valve according to claim 1, wherein the number of the first joint (30) is at least one less than the number of the sub-solenoid valve (20).

8. The integrated multi-port solenoid valve according to claim 6 or 7, wherein the first joint (30) is a two-way joint, a three-way joint or a four-way joint.

9. The integrated multi-port solenoid valve according to claim 8, wherein the sub-solenoid valve (20) is a two-way solenoid valve, a three-way solenoid valve or a four-way solenoid valve.

10. The integrated multi-port solenoid valve according to claim 9, wherein the sub-solenoid valve (20) is at least one of a direct acting solenoid valve, a step direct acting solenoid valve and a pilot solenoid valve.

11. The integrated multi-port solenoid valve according to claim 4, wherein the first end is connected with the second connection port by a laser welding process.

12. The integrated multi-port solenoid valve according to claim 11, wherein the second end is connected with the connection hole (101) by a hot plate welding process.

13. A vehicle thermal management system, wherein the vehicle thermal management system comprises an integrated multi-port solenoid valve as described in any one of claims 1-12.

14. A vehicle, wherein the vehicle comprises the vehicle thermal management system of claim 13.

## Patentansprüche

1. Integriertes Mehrwege-Magnetventil, umfassend:
mindestens zwei Teil-Magnetventile (20), wobei jedes der mindestens zwei Teil-Magnetventile (20) mindestens zwei Verbindungsanschlüsse umfasst;
mindestens ein erstes Verbindungselement (30), wobei jedes der mindestens einen ersten Verbindungselemente (30) mindestens zwei Verbindungsstücke umfasst;
**dadurch gekennzeichnet, dass** das integrierte Mehrwege-Magnetventil ferner eine Basis (10) umfasst, wobei die Basis (10) mit mindestens einer Verbindungsbohrung (101) versehen ist, wobei die mindestens zwei Verbindungsanschlüsse mindestens einen ersten Verbindungsanschluss und einen zweiten Verbindungsanschluss umfassen, wobei der mindestens eine erste Verbindungsanschluss zur Verbindung mit weiteren Teil-Magnetventilen (20) eingerichtet ist, wobei der zweite Verbindungsanschluss der mindestens zwei Teil-Magnetventile (20) über ein zweites Verbindungselement (40) mit einigen der mindestens einen Verbindungsbohrung (101) verbunden ist,
wobei die mindestens zwei Verbindungsstücke einen ersten Typ von Verbindungsstück und einen zweiten Typ von Verbindungsstück umfassen, wobei der erste Typ von Verbindungsstück mit dem mindestens einen ersten Verbindungsanschluss verbunden ist, wobei der zweite Typ von Verbindungsstück mit den weiteren der mindestens einen Verbindungsbohrungen (101) verbunden ist, wobei das mindestens eine erste Verbindungselement (30) und das zweite Verbindungselement (40) einzelne Elemente sind, die unabhängig von den mindestens zwei Teil-Magnetventilen (20) und der Basis (10) ausgebildet sind.

2. Integriertes Mehrwege-Magnetventil nach Anspruch 1, wobei ein Ventilkörper jedes der mindestens zwei Teil-Magnetventile (20) mit der Basis (10) verbunden ist.

3. Integriertes Mehrwege-Magnetventil nach Anspruch 1, wobei das mindestens eine erste Verbindungselement (30) und das zweite Verbindungselement (40) auf der Basis (10) und auf der Seite eines entsprechenden Teil-Magnetventils (20) angeordnet sind.

4. Integriertes Mehrwege-Magnetventil nach Anspruch 1*,* wobei das zweite Verbindungselement (40) ein erstes Ende und ein zweites Ende umfasst, wobei das erste Ende mit dem zweiten Verbindungsanschluss verbunden ist, wobei das zweite Ende mit der Verbindungsbohrung (101) verbunden ist.

5. Integriertes Mehrwege-Magnetventil nach Anspruch 4, wobei die Anzahl der Verbindungsbohrungen (101) größer oder gleich der Anzahl der zweiten Verbindungselemente (40) ist.

6. Integriertes Mehrwege-Magnetventil nach Anspruch 5, wobei die Anzahl der Verbindungsbohrungen (101) größer als die Anzahl der zweiten Verbindungselemente (40) ist, wobei der zweite Typ von Verbindungsstück an der Ausbildung der Verbindungsanschlüsse des integrierten Mehrwege-Magnetventils beteiligt ist.

7. Integriertes Mehrwege-Magnetventil nach Anspruch 1, wobei die Anzahl der ersten Verbindungselemente (30) um mindestens eins geringer als die Anzahl der Teil-Magnetventile (20) ist.

8. Integriertes Mehrwege-Magnetventil nach Anspruch 6 oder 7, wobei das erste Verbindungselement (30) ein Zweiwege-Verbindungselement, ein Dreiwege-Verbindungselement oder ein Vierwege-Verbindungselement ist.

9. Integriertes Mehrwege-Magnetventil nach Anspruch 8, wobei das Teil-Magnetventil (20) ein Zweiwege-Magnetventil, ein Dreiwege-Magnetventil oder ein Vierwege-Magnetventil ist.

10. Integriertes Mehrwege-Magnetventil nach Anspruch 9, wobei das Teil-Magnetventil (20) mindestens eines aus einem direkt wirkenden Magnetventil, einem stufenweise direkt wirkenden Magnetventil und einem Pilot-Magnetventil ist.

11. Integriertes Mehrwege-Magnetventil nach Anspruch 4, wobei das erste Ende mittels Laserschweißverfahren mit dem zweiten Verbindungsanschluss verbunden ist.

12. Integriertes Mehrwege-Magnetventil nach Anspruch 11, wobei das zweite Ende mittels Heißplattenschweißverfahren mit der Verbindungsbohrung (101) verbunden ist.

13. Fahrzeug-Wärmemanagementsystem, wobei das Fahrzeug-Wärmemanagementsystem ein integriertes Mehrwege-Magnetventil nach einem der Ansprüche 1 bis 12 umfasst.

14. Fahrzeug, wobei das Fahrzeug ein Fahrzeug-Wärmemanagementsystem nach Anspruch 13 umfasst.

## Revendications

1. Électrovanne intégrée à orifices multiples, comprenant :
au moins deux sous-électrovannes (20), chacune des au moins deux sous-électrovannes (20) comprenant au moins deux orifices de raccordement ;
au moins un premier raccord (30), chacun de l'au moins un premier raccord (30) comprenant au moins deux raccords de raccordement ;
**caractérisée en ce que**, l'électrovanne intégrée à orifices multiples comprend en outre une base (10), la base (10) est pourvue d'au moins un trou de raccordement (101), les au moins deux orifices de raccordement comprennent au moins un premier orifice de raccordement et un second orifice de raccordement, l'au moins un premier orifice de raccordement est conçu pour être raccordé à d'autres sous-électrovannes (20), le second orifice de raccordement des au moins deux sous-électrovannes (20) est raccordé à l'un de l'au moins un trou de raccordement (101) par l'intermédiaire d'un second raccord (40) ;
les au moins deux raccords de raccordement comprennent un premier type de raccord de raccordement et un second type de raccord de raccordement, le premier type de raccord de raccordement est raccordé à l'au moins un premier orifice de raccordement, le second type de raccord de raccordement est raccordé à l'autre de l'au moins un trou de raccordement (101), l'au moins un premier raccord (30) et le second raccord (40) sont des éléments distincts indépendants des au moins deux sous-électrovannes (20) et de la base (10).

2. Électrovanne intégrée à orifices multiples selon la revendication 1, dans laquelle un corps de vanne de chacune des au moins deux sous-électrovannes (20) est raccordé à la base (10).

3. Électrovanne intégrée à orifices multiples selon la revendication 1, dans laquelle l'au moins un premier raccord (30) et le second raccord (40) sont situés sur la base (10) et sur le côté d'une sous-électrovanne (20) correspondante.

4. Électrovanne intégrée à orifices multiples selon la revendication 1*,* dans laquelle le second raccord (40) comprend une première extrémité et une seconde extrémité, la première extrémité est raccordée au second orifice de raccordement, et la seconde extrémité est raccordée au trou de raccordement (101).

5. Électrovanne intégrée à orifices multiples selon la revendication 4, dans laquelle le nombre de trous de raccordement (101) est supérieur ou égal au nombre de seconds raccords (40).

6. Électrovanne intégrée à orifices multiples selon la revendication 5, dans laquelle le nombre de trous de raccordement (101) est supérieur au nombre de seconds raccords (40), le second type de raccord de raccordement participant à la constitution des orifices de raccordement de l'électrovanne intégrée à orifices multiples.

7. Électrovanne intégrée à orifices multiples selon la revendication 1, dans laquelle le nombre de premiers raccords (30) est inférieur d'au moins un au nombre de sous-électrovannes (20).

8. Électrovanne intégrée à orifices multiples selon la revendication 6 ou 7, dans laquelle le premier raccord (30) est un raccord à deux voies, un raccord à trois voies ou un raccord à quatre voies.

9. Électrovanne intégrée à orifices multiples selon la revendication 8, dans laquelle la sous-électrovanne (20) est une électrovanne à deux voies, une électrovanne à trois voies ou une électrovanne à quatre voies.

10. Électrovanne intégrée à orifices multiples selon la revendication 9, dans laquelle la sous-électrovanne (20) est au moins l'une parmi une électrovanne à action directe, une électrovanne à action directe pas à pas et une électrovanne pilote.

11. Électrovanne intégrée à orifices multiples selon la revendication 4, dans laquelle la première extrémité est raccordée au second orifice de raccordement par un procédé de soudage laser.

12. Électrovanne intégrée à orifices multiples selon la revendication 11, dans laquelle la seconde extrémité est raccordée au trou de raccordement (101) par un procédé de soudage sur plaque chauffante.

13. Système de gestion thermique de véhicule, dans lequel le système de gestion thermique de véhicule comprend une électrovanne intégrée à orifices multiples selon l'une quelconque des revendications 1 à 12.

14. Véhicule, dans lequel le véhicule comprend le système de gestion thermique de véhicule selon la revendication 13.
